Europäisches Patentamt

European Patent Office

Office européen des brevets

(11) Publication number: **0 395 232**
**A1**

## (12) EUROPEAN PATENT APPLICATION

(21) Application number: **90303542.6**

(22) Date of filing: **03.04.90**

(51) Int. Cl.⁵: **F16C 1/26, B60R 1/06**

(30) Priority: **26.04.89 GB 8909474**

(43) Date of publication of application:
**31.10.90 Bulletin 90/44**

(84) Designated Contracting States:
**DE FR GB IT**

(71) Applicant: **BRITAX (GECO) S.A.**
**88 Avenue de Fontainebleau**
**F-77981 Saint Fargeau Ponthierry(FR)**

(72) Inventor: **Beraud, Henry**
**Tour Beausite, 2 Rue du Haut Changis**
**F-77210 Avon(FR)**

(74) Representative: **Hollinghurst, Antony**
**Britax Limited Patent Department**
**Chichester West Sussex PO19 2AQ(GB)**

(54) **Remote control system.**

(57) In a remote control system for adjusting the orientation of a pivotally mounted member (28), the pivotally mounted member (28) is connected to an actuator (12) by a plurality of axially movable wires (42, 44, 46; 60, 62, 64) are located in respective tubular channels (36, 38, 40; 54, 56, 58) in a common sheath (32; 50) formed of plastics material which also carries a static reference wire (34; 52).

Fig. 1.

Fig. 2.

# REMOTE CONTROL SYSTEM

This invention relates to a remote control system for adjusting the orientation of a pivotally mounted member, of the type in which the pivotally mounted member is connected to an actuator by a plurality of axially movable wires in respective sheaths. A system of this type, applied to the control of the orientation of a rear view mirror for a motor vehicle, is disclosed in US-A-3533303.

In known systems of this type, each cable consists of a axially movable wire and a sheath formed of spirally wound strip metal. Movement is transmitted from the actuator to the control member by relative movement between the axially movable wire and its sheath. Consequently it is necessary for the length of each axially movable wire relative to its sheath to be accurately determined in order to avoid undue backlash in the system. Accurate control of the length of the spirally wound sheath is difficult both because it is easily stretched and because relative rotational movement between its end can cause the sprial to partly unwind. In addition, when the cable is to be used in an environment where it may be subject to corrosion, it is necessary to form the sheath of a non-corrosive material such as stainless steel, with a resulting increase in expense.

According to the invention, in a remote control system of the foregoing type, the axially movable wires are located in respective tubular channels in a common sheath formed of plastics material which also carries a static reference wire.

With this arrangement, it is merely necessary for the length of each axially movable wire to be accurately determined in relation to that of the reference wire. In addition, adjustment to compensate for inaccuracies can be provided by merely adjusting the anchorage at one end of the reference wire.

The plastics sheath may have the reference wire embedded therein. For example, the sheath may be formed round the reference wire by extrusion.

If it is desired to constrain the assembly of control wires to a predetermined path, the reference wire may be a solid wire which will take a permanent set. On the other hand, if a completely flexible assembly is required, the reference wire may be a stranded wire. The axially movable wires are preferably stranded wires in any event.

Embodiments of the invention will now be described, by way of example, with reference to the accompanying drawings, in which;

Figure 1 is a schematic diagram of a known remotely controlled mirror employing three separate bowden cables;

Figure 2 is a cross-sectional view of a cable assembly in accordance with the invention, suitable to replace the three separate cables shown in Figure 1;

Figure 3 is a cross-sectional view, similar to Figure 2, of an alternative cable assembly in accordance with the invention.

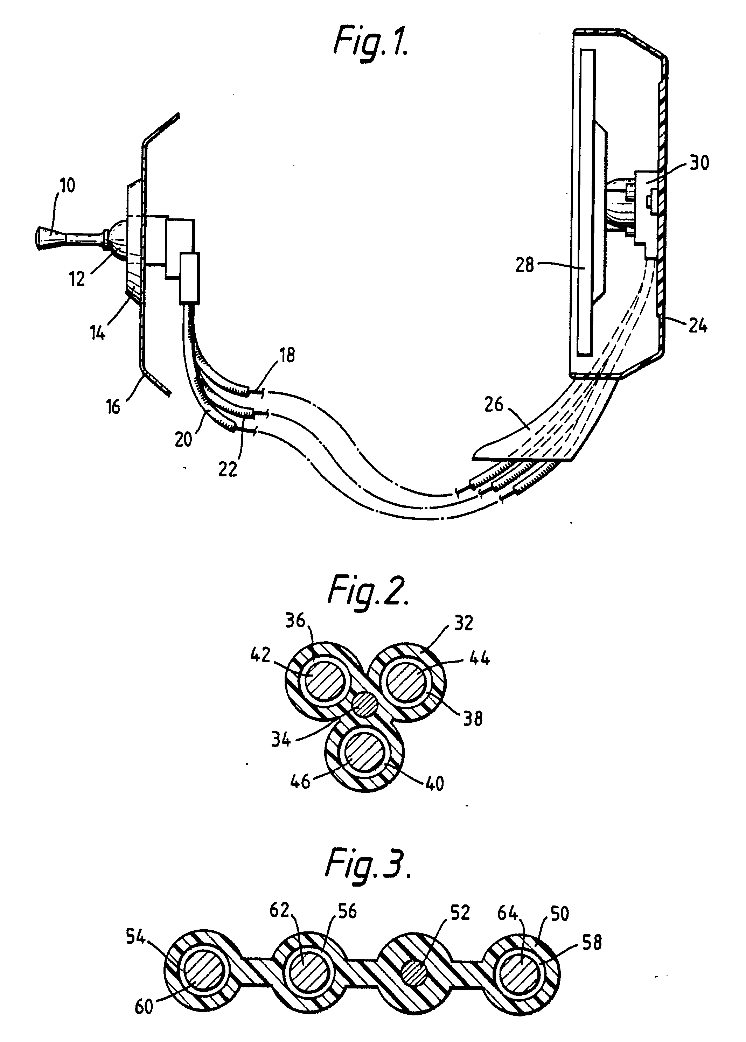

In the rear view mirror assembly shown in Figure 1, an actuator lever 10 is secured to a spherical actuating element 12 mounted in a bearing 14 which is secured to a panel 16 within a motor vehicle. Three Bowden cables 18, 20 and 22 lead from the back of the actuating element 12 to a vehicle exterior mirror which comprises a housing 24 having a bracket 26 whereby it may be mounted on the side of a vehicle body. Within the housing 24, a reflective member 28 is supported on an assembly 30 which is arranged to adjust the orientation of the reflective member 28 under the control of the cables 18, 20 and 22.

Figure 2 shows a cable assembly in accordance with the invention which can be used to replace the three Bowden cables 18, 20 and 22. The assembly consists of a sheath 32 of plastics material having a solid reference wire 34 embedded therein at a central location. Uniformly spaced round the reference wire 34 are three tubular channels 36, 38 and 40, each of which contains a respective flexible axially movable wire 42, 44 and 46.

The assembly illustrated in Figure 2 is highly compact. However, the minimum radius of corner round which it can be bent is restricted. An alternative arrangement, which is more suitable for bending round small radius corners is illustrated in Figure 3. In this embodiment, a plastics sheath 50 has a reference wire 52 embedded therein and contains three tubular channels 54, 56 and 58, all disposed side by side. Each of the channels 54, 56 and 58 contains a respective flexible wire cable 60, 62 and 64. This embodiment is highly flexible in the common plane of the four wires 52, 60, 62 and 64.

Instead of having an embedded reference wire, the plastics sheath may be formed with four channels, three containing axially movable wires and the fourth containing a reference wire.

The embodiment illustrated in Figure 3 may be modified by providing three reference wires, each closely adjacent to a respective axially movable wire. This permits the webs joining the four cylindrical portions of the sheath to be very thin, thus further enhancing the flexibility of the assembly.

**Claims**

1. A remote control system for adjusting the orientation of a pivotally mounted member (28), wherein the pivotally mounted member (28) is connected to an actuator (12) by a plurality of axialy movable wires (42, 44, 46; 60, 62, 64) in respective sheaths, characterised in that the axially movable wires (42, 44, 46; 60, 62, 64) are located in respective tubular channels (36, 38, 40; 54, 56, 58) in a common sheath (32; 50) formed of plastics material which also carries a static reference wire (34; 52).

2. A remote control system according to claim 1, wherein the reference wire (34; 52) is embedded in the sheath (32, 50).

3. A remote control system according to claim 2, wherein the sheath (32; 50) is formed round the reference wire (34; 52) by extrusion.

4. A remote control system according to claim 1, 2 or 3, wherein the reference wire (34; 52) is a solid wire.

5. A remote control system according to claim 1, 2 or 3, wherein the reference wire (34; 52) is a stranded wire.

6. A remote control system according to any preceding claim, wherein the axially movable wires (42, 44, 46; 60, 62, 64) are stranded wires.

## Fig.1.

## Fig.2.

## Fig.3.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 439 555 (RECH)<br>* Column 2, lines 34-37; column 3, lines 40-42; figure 8 *<br>--- | 1,2,4 | F 16 C 1/26<br>B 60 R 1/06 |
| Y | FR-A-2 074 884 (CASCO)<br>* Page 12, lines 11-19; figures 11,18 *<br>--- | 1,2,3,4,6 | |
| Y | FR-A-2 072 615 (DBA)<br>* Page 1, lines 27-31; page 3, lines 15-16; fig. *<br>--- | 1,2,3,4,6 | |
| A | US-A-4 052 911 (FELDSTEIN)<br>* Whole document *<br>----- | 1,6 | |
| | | | **TECHNICAL FIELDS SEARCHED (Int. Cl.5)**<br><br>F 16 C<br>B 60 R |

The present search report has been drawn up for all claims

| Place of search | Date of completion of the search | Examiner |
|---|---|---|
| THE HAGUE | 15-06-1990 | ORTHLIEB CH.E. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                                        
& : member of the same patent family, corresponding
    document

EPO FORM 1503 03.82 (P0401)